# EUROPEAN PATENT APPLICATION

(11) **EP 4 756 075 A1**
(43) Date of publication of application: **10.06.2026**
(21) Application number: 24217257.5
(22) Date of filing: 03.12.2024
(51) Int. Cl.: C25B 1/04, C25B 9/19, C25B 9/23, C25B 11/00, C25B 11/04, C25B 11/051, C25B 11/055, C25B 13/04, C25B 13/08

(54) **PHASE INVERSION TECHNIQUES IN MEMBRANE ELECTRODE ASSEMBLY MANUFACTURE AND RELATED METHODS**

(71) Applicant: VITO NV, 2400 Mol (BE)
(72) Inventor: TSEHAYE, Misgina Tilahun, 2400 Mol (BE); CHEN, Zhiyuan, 2400 Mol (BE); VAES, Jan, 2400 Mol (BE)
(74) Representative: Arnold & Siedsma

(57) **Abstract**

The present invention is related to the field of membrane electrode assembly manufacture. It provides a method for true zero-gap membrane electrode assembly, comprising casting an electrode slurry onto an electrode separator slurry or an electrode separator to form a combination (100), followed by a phase inversion step that induces the formation of the membrane electrode assembly in situ (102). The electrode separator can be a polymeric, polymer-inorganic composite, cation exchange, anion exchange, bipolar or amphoteric membrane. The electrode slurry may include an anode or cathode slurry, and can contain a catalyst, binder, or conductive material. The phase inversion step involves exposing the combination to a non-solvent, such as water or alcohols, at temperatures ranging from about -10 °C to about 100 °C.

## Description

### TECHNICAL FIELD

The present invention is related to the field of membrane-electrode assembly manufacture. It provides a method for true zero-gap membrane-electrode assembly comprising an electrode separator and at least one porous electrode, wherein the electrodes are in close contact with the electrode separator is disclosed in this patent. This invention provides a method to make the membrane-electrode assembly via single or stepwise castings followed by a phase inversion process(es). The membrane-electrode assembly of this invention can be used in various devices, including electrolyzers, fuel cells, battery, filtration, resource recovery and the like.

### BACKGROUND

Membrane electrode assemblies (MEAs) are critical components in fuel cells and electrolyzers, playing a pivotal role in the electrochemical conversion processes. The performance and efficiency of these devices heavily depend on the quality and characteristics of the MEA, which consists of a membrane sandwiched between two electrodes. The membrane can be porous or dense, with or without ion selective property.

Comprising a combination of different layers, i.e., an anode electrode layer, than can be composed of an anode diffusion layer and an anode catalyst layer; a membrane (herein also referred to as an electrode separator); and cathode electrode layer, that can be composed of a catalyst layer, and cathode diffusion layer; the MEA's quality is vital for the performance, cost, and durability of the different electrochemical devices, such as water electrolyzers, electrochemical CO₂ reduction and (redox flow) battery. It consists, in the most general sense, two catalyzed electrodes between which is sandwiched a solid polymer electrolyte/ion conducting electrolyte, known as membrane or electrode separator. As it is known to the skilled person, the common approaches for incorporating the catalyst into an electrode/membrane are catalyst-coated membrane and catalyst-coated substrate.

Traditional methods of manufacturing MEAs often involve multiple steps and layers, which can lead to issues such as poor adhesion between layers, non-uniform distribution of materials, and increased production costs. Common methods for assembling membranes and electrodes into a MEA include:
- Room temperature pressing/calendaring is another common method, pressing MEA components at room temperature for a uniform structure, advantageous for large-scale production, but does not result in a truly zero-gap configuration with still a gap between the layers.
- Hot pressing involves high heat and pressure, improving adhesion and integration of MEA layers. However, it consumes more energy and may cause thermal degradation of components. Poorly controlled pressing can lead to high gas crossover in thin membranes and challenges in maintaining membrane integrity.
- Gluing with ionomer binder is also used, applying adhesive between layers for a strong bond. Proper binder selection is crucial for the MEA stability, but some ionomers have increased water uptake, leading to dissolution at higher temperatures and chemical instability with KOH. Cross-linkers added to the polymer matrix can improve strength but may reduce chain mobility and void volume. Unoptimized/incorrect cross-linkers can limit ion mobility by forming short-chain cross-linking. Hydrocarbon-based ionomers used in alkaline MEAs lack an accessible glass transition, making hot-pressing less effective for fusion.

These problems in the current manufacturing methods of MEAs cannot ensure uniformity and lead to defects/gaps at the boundaries between the layers, causing performance losses (e.g., low initial performance due to high ohmic resistance) and degradation due to insufficiently intimate interfaces or delamination of components.

In summary, the current methods face multiple challenges that hinder the performance and durability of the MEAs. These challenges include the non-zero-gap design leading to increased ohmic resistance, a poor membrane-electrode/catalyst interface, susceptibility to delamination at high alkaline and temperature conditions due to unstable ionomers, limited availability of suitable ionomers for various catalyst materials, and the lack of feasible techniques assemble for thin membranes. These issues collectively compromise the performance/efficiency, durability, and versatility of MEAs, emphasizing the critical need to address these challenges for the advancement of various electrochemical processes, such as water electrolysis, which serves as an example in the context of low cost H₂ production.

These challenges necessitate the development of more integrated and efficient manufacturing techniques.

In the context of electrochemical devices, such as water electrolyzers, redox flow batteries and fuel cells, the demand for more efficient and cost-effective energy solutions is driving innovation in MEA production. The ability to produce MEAs with improved structural integrity and performance characteristics is crucial for advancing water electrolysis and fuel cell technologies. This includes enhancing the durability, conductivity, and overall efficiency of the MEA, while also reducing material waste and production time. As the energy sector continues to evolve, there is a pressing need for novel manufacturing approaches that can address these challenges and support the widespread adoption of clean energy technologies.

### SUMMARY

In accordance with embodiments, a method of manufacturing a membrane electrode assembly is provided. The method involves casting an electrode slurry onto an electrode separator slurry or directly onto an electrode separator to form a combination. This combination is then subjected to a phase inversion step, which induces the formation of the membrane electrode assembly in situ as part of the phase inversion process.

The term electrode separator refers to the separator material placed between the two electrodes. It can also be referred as membrane, separator or diaphragm.

In accordance with other embodiments, the electrode separator used in the method can be a polymeric membrane, a polymer-inorganic composite membrane, a cation exchange membrane, an anion exchange membrane, an amphoteric membrane, or bipolar membrane. This provides flexibility in the choice of materials for the electrode separator, allowing for customization based on specific application needs.

The electrode separator can be porous or dense membranes.

In yet other embodiments, the electrode separator is present as a membrane onto which the electrode slurry is cast. This configuration allows for direct application of the slurry onto a pre-formed membrane, facilitating the manufacturing process.

In further embodiments, the electrode separator is present as a slurry that is cast onto a support material, onto which the electrode slurry is subsequently cast. This approach involves an additional step of preparing the membrane slurry on a support before applying the electrode slurry.

In accordance with additional embodiments, the support material used for casting the membrane slurry can be a glass plate. This choice of support material provides a stable and smooth surface for the casting process.

In accordance with additional embodiments, the support material used for casting the membrane slurry can be a mechanical reinforcer material. This choice of support material provides a mechanical strength for the electrode separator during application.

In other embodiments, the electrode separator slurry is cast onto the support material prior to the casting of the electrode slurry. This sequence ensures that the membrane slurry is properly set before the electrode slurry is applied.

In accordance with further embodiments, the electrode slurry comprises at least one of an anode slurry or a cathode slurry. This allows for the creation of either an anode or cathode layer as part of the membrane electrode assembly.

In yet other embodiments, the electrode slurry includes at least one of an electrochemical active material, a solvent, a binder, and a conductive material. These components are essential for the functionality of the electrode, providing catalytic activity, structural integrity, and electrical conductivity.

In accordance with additional embodiments, the electrode separator slurry comprises at least one of a polymer, a solvent, or an additive. These components are crucial for forming the membrane structure and ensuring its performance characteristics.

In other embodiments, the phase inversion step involves exposing the combination to a non-solvent. This step is critical for inducing the phase inversion necessary to form the membrane electrode assembly.

In accordance with further embodiments, the non-solvent used in the phase inversion step is selected from the group consisting of water, alcohols, and mixtures thereof. The choice of non-solvent can affect the properties of the resulting membrane electrode assembly.

In yet other embodiments, the phase inversion step is carried out at a temperature ranging from about -10 °C to about 100 °C. This temperature range is suitable for the phase inversion process and can be adjusted based on the specific materials used.

In accordance with additional embodiments, a membrane electrode assembly is obtained by the method described in any of the preceding claims. This final product is the result of the described manufacturing process and embodies the features and advantages of the method.

### BRIEF DESCRIPTION OF THE DRAWINGS

FIG. 1 illustrates, in a flowchart, the process of casting an electrode slurry and performing phase inversion.
FIG. 2 SEM cross-section image of MEA; composite anode, electrode separator, composite cathode, as well as the interface between these layers.
FIG.3 SEM-EDS composition of the different layers of the MEA
FIG. 4 Gas permeability of MEA
FIG. 5 MEA performance in alkaline water electrolyzer

### DETAILED DESCRIPTION

The state-of-the-art (SoA) membrane-electrode assembly (MEA) in electrolysis cells faces a number of critical challenges, primarily due to the complex interaction between the electrodes and electrode separator. One major issue is that sharp, metal-based SoA electrodes have a tendency to penetrate or pierce the usually thin membrane, compromising the MEA's structural integrity. This can cause premature degradation or failure of the device because the physical damage disrupts the electrochemical processes required for efficient hydrogen production. The piercing of the membrane by metal electrodes demonstrates a fundamental incompatibility in materials, as mechanical stresses from the electrode are not adequately absorbed or managed by the membrane.

Another challenge is the high temperature and pressure required during the manufacturing of current MEAs. These extreme conditions, while necessary for high ionic conductivity in the electrolyte and proper layer bonding, cause significant stress at the electrode-membrane interface. This stress frequently causes a non-homogeneous interface, in which poor contact between the electrode and membrane limits the efficient transfer of ions and electrons. Furthermore, gaps between the electrode and the membrane increase the MEA's resistance, resulting in high cell resistance and suboptimal performance. These gaps may result from uneven surface properties or the materials' inability to form a uniform layer during the high-temperature assembling process.

These structural and material issues also have an impact on the performance and durability of SoA MEAs. The non-homogeneous interface, combined with the inherent mechanical stress of thermal cycling, results in poor performance due to increased ohmic resistance, limiting current density and efficiency. Furthermore, mechanical and chemical degradation of materials over time reduces durability, posing a significant barrier to long-term industrial applications of electrochemical devices. This accelerated degradation reduces the electrolyzers' operational lifespan, making it difficult to achieve economic viability in large-scale hydrogen production processes.

In conclusion, the high resistance, low performance, and poor durability of SoA MEAs in electrolyzers are directly related to mechanical issues such as electrode piercing, interface gaps, and non-homogeneous bonding, as well as the high-temperature and high-pressure conditions used during assembly. To address these challenges, materials science innovation is critical, particularly in developing more compatible electrode and membrane materials that can withstand harsh operating conditions while maintaining the MEA's integrity and efficiency.

It is an object of the present invention to provide a new advanced MEA development approach to address some of the above problems Such method allows for better control of the membrane-electrode interface and gap, ensuring improved homogeneity, tailored properties, and precise composition. As a result, it optimizes the interface and minimizes interfacial resistance.

In an embodiment the membrane layer and the electrode layer are using the same polymer (or polymer in their suspension/dissolved state). Tape cast coating of such layers, i.e., electrode layer and a membrane layer using the same polymer, significantly improves adhesion once the MEA is formed. The chemical similarity between the layers allows for strong chain entanglement, while surface roughness and molecular mobility facilitate mechanical interlocking. Additionally, polymer chain diffusion across the interface creates a seamless transition, enhancing adhesion. In such method, the polymer solidification and formation of interface eliminates compatibility issues, ensuring consistent cohesive strength and uniform interface properties. Optimal processing conditions and proper surface preparation further maximize molecular interactions, resulting in a robust and durable interface that enhances the overall performance and reliability of the material.

A MEA according to the invention, and in particular a said embodiments wherein the embodiment the membrane layer and the electrode layer are using the same polymer (or polymer in their suspension/dissolved state), offers the benefit of preventing the leakage of active components, such as fillers, from the membrane.

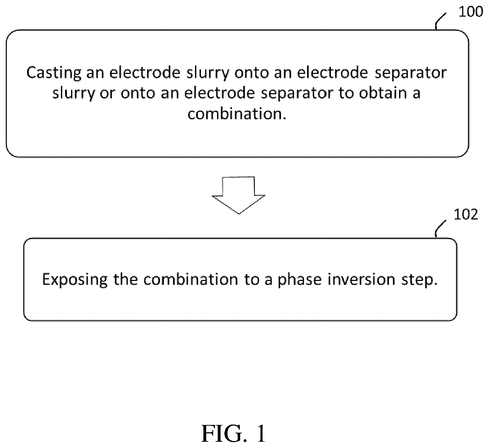

FIG. 1 is a flowchart illustrating a method for the manufacture of a membrane electrode assembly through phase inversion, according to an embodiment. The process may begin with the casting of an electrode slurry onto an electrode separator slurry or directly onto an electrode separator to form a combination. The electrode separator may be characterized as a polymeric membrane, a polymer-inorganic composite membrane, a cation exchange membrane, an anion exchange membrane, a bipolar or an amphoteric membrane. The electrode separator may serve as a base onto which the electrode slurry is casted. Alternatively, the electrode separator may be present as a membrane slurry that is casted on a support material, such as a glass plate, onto which the electrode slurry is subsequently casted. The support material may be specifically identified as a glass plate. The membrane slurry may be casted onto the support material prior to the casting of the electrode slurry. The electrode slurry may comprise at least one of an anode slurry or a cathode slurry, and it may also include components such as a catalyst, a binder, a conductive material or a current collector (such as Nickel foam or mesh). The electrode separator slurry may comprise at least one of a polymer, a solvent, or an additive. This method may facilitate the assembly of the electrode and electrode separator, potentially forming an electrode structure that is integral to the membrane electrode assembly.

In the context of the membrane electrode assembly manufacture, the process may involve exposing the combination of the electrode slurry and the electrode separator to a phase inversion step. This phase inversion step may be crucial in solidifying and forming the structure of the membrane electrode assembly. The phase inversion step may involve exposing the combination to a non-solvent, which may be selected from a group consisting of water, alcohols, and mixtures thereof. This exposure may facilitate the phase inversion process, potentially leading to the desired structural formation. The phase inversion step may be carried out at a temperature ranging from about -10 °C to about 100 °C, which may be essential for achieving the appropriate phase transition. The non-solvent exposure may induce a phase separation in the polymeric components of the electrode separator, thereby solidifying the structure. This process may be integral to the formation of a stable and functional membrane electrode assembly. The phase inversion step may be a critical component in the overall method of manufacturing the membrane electrode assembly, as it may ensure the proper integration and solidification of the electrode and membrane components.

In the context of manufacturing a membrane electrode assembly, the process may involve the casting of an electrode slurry onto an electrode separator slurry or directly onto an electrode separator. This action may serve to combine the electrode and electrode separator, potentially forming an electrode structure, and electrode-membrane interface/assembly. The electrode separator may be present in various forms, such as a polymeric membrane, a polymer-inorganic composite membrane, a cation exchange membrane, an anion exchange membrane, a bipolar or an amphoteric membrane. The casting process may be executed on a support material, which can include a glass plate, providing a base for the casting. The combination of the electrode slurry and the membrane may then be exposed to a phase inversion step. This phase inversion step may induce the solidification and formation of the structure, thereby contributing to the manufacture of the membrane electrode assembly. The phase inversion may involve the use of a non-solvent, such as water or alcohols, and may be carried out at a temperature ranging from about -10 °C to about 100 °C. The method may allow for the membrane electrode assembly to be formed in situ as part of the phase inversion of the combination. The process may be designed to accommodate various membrane material options, thereby providing flexibility in the manufacturing process.

In the context of the manufacturing process for a membrane electrode assembly, the phase inversion step may be a critical component. This step may involve exposing the combination of an electrode slurry and an electrode separator or electrode separator slurry to a phase inversion process. The phase inversion step may serve to solidify and form the structure of the membrane electrode assembly. The process may be initiated by casting the electrode slurry onto the electrode separator or electrode separator slurry, which may be present on a support material such as a glass plate. The phase inversion step may be designed to induce the formation of the membrane electrode assembly in situ as part of the phase inversion of the combination. The phase inversion step may involve the use of a non-solvent, which may be selected from water, alcohols, or mixtures thereof, to facilitate the phase inversion process. The temperature at which the phase inversion step is carried out may range from about -10 °C to about 100 °C. The phase inversion step may be a crucial part of the method of manufacture, as it may enable the solidification and formation of the membrane electrode assembly structure. The method may also allow for the use of various types of electrode separators, such as polymeric, polymer-inorganic composite, cation exchange, anion exchange, or amphoteric membranes, providing options for the membrane material. The phase inversion step may be integral to the overall manufacturing process, contributing to the successful formation of the membrane electrode assembly.

In the context of the membrane electrode assembly manufacturing process, various membrane types may be utilized, including cation exchange membranes, polymer-inorganic composite membranes, amphoteric membranes, polymeric membranes, and anion exchange membranes. These membranes may serve as potential material options, providing flexibility in the selection of membrane materials. The process may involve casting an electrode slurry onto these membranes, which can be polymeric, polymer-inorganic composite, cation exchange, anion exchange, a bipolar or amphoteric in nature. This casting step may facilitate the combination of the electrode and membrane, potentially forming an electrode structure. The phase inversion step may then be employed to solidify and form the structure, contributing to the manufacture of the membrane electrode assembly. The phase inversion step may involve exposing the combination to a non-solvent, which may include water, alcohols, or mixtures thereof, and may be carried out at a temperature ranging from about -10 °C to about 100 °C. This step may induce the formation of the membrane electrode assembly in situ as part of the phase inversion of the combination. The method of manufacture may be designed to accommodate various membrane material options, allowing for the selection of membranes that best suit the desired properties of the final assembly.

In the context of the manufacturing process, a glass plate or a support material may be utilized as a base onto which the electrode slurry is casted. This action may serve as a foundational step in the formation of the membrane electrode assembly. The support material may provide a stable surface that facilitates the even distribution of the electrode slurry, which may be crucial for the subsequent phase inversion step. The phase inversion step may involve exposing the combination of the electrode slurry and the support material to specific conditions that induce solidification and structural formation. This process may be integral to the in-situ formation of the membrane electrode assembly, as it may allow for the controlled development of the membrane's properties. The use of a glass plate or similar support material may be advantageous in ensuring the uniformity and integrity of the membrane structure, which may be essential for the assembly's performance. The method of manufacture may incorporate these steps to achieve a membrane electrode assembly with desired characteristics, potentially enhancing its application in various electrochemical systems.

In the context of the method of manufacturing a membrane electrode assembly, the process may involve the utilization of phase inversion as a critical step. The phase inversion step may be employed in the manufacture of a membrane electrode assembly, where it may serve to solidify and form the structure of the assembly. This step may be integral to the method of manufacture, potentially allowing for the in situ formation of the membrane electrode assembly as part of the phase inversion of the combination. The method may involve casting an electrode slurry onto an electrode separator slurry or onto an electrode separator, which may be polymeric, polymer-inorganic composite, cation exchange, anion exchange, or amphoteric. The electrode separator may be present as a membrane onto which the electrode slurry is being casted, or it may be present as a membrane slurry casted on a support material, such as a glass plate. The casting of the electrode slurry may be a step that combines the electrode and membrane, potentially forming the electrode structure. The phase inversion step may then expose the combination to a non-solvent, which may include water, alcohols, or mixtures thereof, to induce the phase inversion. This step may be carried out at a temperature in the range of about -10 °C to about 100 °C, potentially allowing for the solidification and formation of the membrane electrode assembly. The method may also involve the use of a support material, which may serve as a base for casting the electrode slurry. The support material may be a glass plate, onto which the membrane slurry is casted prior to casting the electrode slurry. The electrode slurry may comprise at least one of an anode slurry or a cathode slurry, and it may also include a catalyst, a binder, or a conductive material. The electrode separator slurry may comprise at least one of a polymer, a solvent, or an additive. The phase inversion step may be a crucial part of the method, potentially enabling the manufacture of a membrane electrode assembly with the desired properties.

### EXAMPLES

### Material selection

In Examples 2 to 4 herein below, three alternative approaches in a MEA fabrication according to the present invention are provided. This approach is compared to the current state of the art cell assembly of example 1. In each of said examples the same electrode slurry has been used, but this shouldn't restrict the scope as the present invention. In general, the electrode slurry as used herein, will enable the formation of a polymer - metal/ metal oxide - composite electrode. The two electrodes can be of the same or of a different composition / microstructure.

**Electrode slurry:** The following electrode slurry (polymer + electrochemical active material) preparation - Polysulfone/Nickel microparticles 5/95 (wt/wt.) - hereinafter also referred to as Ni electrode slurry, has been used in Examples 1 to 4. In a Thinky mixer container, Polysulfone (PSU, 1 g) and Polyvinylpyrrolidone (PVP, 1g) is dissolved in 5 mL of N-Methyl-2-pyrrolidone (NMP) for 2 mins at 2000 rpm using Thinky mixer. Ni (microparticle, 10 g) is added and mixed for 2 mins at 2000 rpm. The remaining 9 g Ni is added and mixed for another 2 mins at 2000 rpm. 5.5 mL NMP is added and mixed for another 2 mins at 2000 rpm and degassed at 900 rpm for 1.5 mins.

**Electrode separator dope/slurry preparation, or selection of membrane:** The electrode separator can be polymeric, polymer-inorganic composite or ceramic membrane. It can be inert, or ion selective membranes, such as cation exchange membrane, anion exchange membrane, amphoteric membrane, or bipolar membrane. It can be an already made or, preferably, be prepared during the MEA formation as shown schematically in Figure 1 below. In the examples 1 and 2 commercial Zirfon 500 (AGFA) and home-made 200 µm thick membranes are used as examples of already made membrane materials. In the examples 3 and 4, the membrane is prepared in situ as part of the method, from a 15/85 wt.% PSU/ZrO₂ membrane slurry.

**Phase inversion coagulation bath:** In the following examples the phase inversion step is based on immersion of the casted combination of electrode slurry with membrane dope/slurry, or selection of membrane, in a coagulation bath. The composition of the coagulation bath could be water or a combination of solvents, such as NMP/water that is compatible with the membrane/electrode or polymer chosen. In the examples 1 to 3 the phase inversion step has been performed in a coagulation bath containing NMP/water (50:50). The selection of coagulation bath (composition, temperature and duration) plays a role in forming the porous network of the electrode, electrode separator and MEA interface. Thus, the coagulation bath can also be of different composition, including 100% water.

### EXAMPLE 1 - MEA Fabrication using state of the art cell assembly as a comparative example

The slurries were prepared as discussed above by dissolving the PSU in a solvent, followed by addition of Ni particles. Both the cathode and anode electrodes (herein exactly the same) were prepared as follows: The 5/95 (wt/wt.) PSU/Ni-hereinafter also referred to as Ni slurry were poured onto a doctor blade and casted on a clean glass plate with a defined gap (for example a 800 µm gap) and at a speed of 0.25 m/min. The electrode films (i.e. the electrode green bodies) were then immersed in a coagulation bath containing 50/50 vol.% NMP/water, at room temperature for 30 minutes to induce phase inversion. The obtained porous composite electrodes were then immersed in excess reverse osmosis water for 24 h, followed by heating them in water at 80 °C to remove any remaining impurities, solvent or PVP. The commercial Zirfon 500 membrane and the self-made composite membrane were placed between the prepared electrodes and pressed to form reference MEA 1 and MEA 2, respectively. The prepared MEAs were characterized and tested in an alkaline water electrolyzer, as described in the following examples.

### EXAMPLE 2 - MEA Fabrication of MEA-3 by casting on both sides of a membrane slurry in three phase inversion steps

In this example not only the electrode layers, but also the membrane layer is prepared from a slurry using a phase inversion step in a stepwise manner.
a. Some of the Ni slurry is poured onto a doctor blade placed on top of a clean glass and is casted using 800 µm gap at 0.25 m/min speed.
b. The formed electrode film is then transferred to a coagulation bath containing non-solvent NMP/water (50:50), with phase inversion at room temperature for 30 mins.
c. The just formed electrode is dried using dry air or tissue paper gently to remove the water/solvent from the sample.
d. Now, the membrane slurry (PSU/ZrO₂ slurry) is poured on top of the formed electrode and casted using 400 µm gap at the same speed.
e. The film with a glass is then transferred to a coagulation bath containing non-solvent NMP/water (50:50) with phase inversion at room temperature for 30 mins.
f. The just formed 2-layers materials is dried using dry air or tissue paper gently to remove the water/solvent from the sample.
g. The remaining slurry is casted on top of the membrane side of the 2-layers, the same way as above.
h. The film is then transferred to a coagulation bath containing non-solvent NMP/water (50:50), with phase inversion at room temperature for 30 mins.
i. The formed MEA-3 is immersed in excess RO water overnight.
j. The remaining impurity is removed by heating the electrodes in hot water (80 °C) for 1 hour.
k. The obtained MEA is either stored in RO water for a while or immediately placed in a sealed bag containing some water..

### EXAMPLE 3 - MEA Fabrication of MEA-4 by casting on both sides of a membrane slurry in a single-phase inversion step

In this example not only the electrode layers, but also the membrane layers are prepared from a membrane slurry, and is the MEA generated using a single-phase inversion step.
a. In a first step, part of the Ni slurry is poured onto a doctor blade and is casted 800 µm gap at 0.25 m/min speed.
b. In the next step the membrane slurry will be casted on top of the Ni slurry using 400 µm casting knife gap with the same speed.
c. In the next step, a second part of the Ni slurry is casted on top of the membrane slurry using 800 µm casting knife gap at 0.25 m/min speed.
d. The thus obtained combination of layers is then transferred to phase inversion in a coagulation bath containing non-solvent NMP/water (50:50) at room temperature for 30 mins.
e. The formed MEA is immersed in excess RO water overnight.
f. The remaining impurity is removed by heating the electrodes in hot water (80 °C) for 1 hour.
The obtained MEA is either stored in RO water for a while or immediately placed in a sealed bag containing some water.

### EXAMPLE 4 - MEA Fabrication of MEA-5 (Zirfon 500) and MEA-6 (200 µm lab-made composite membrane) by casting on both sides of an existing membrane in a step wise manner. It is obvious that if needed, only one side of membrane can be coated with the electrode.

For MEA-5 and 6, the slurry is poured onto a doctor blade and casted on top of the respective membrane supports.
a. Slightly dried Zirfon 500 or 200 µm lab-made membrane is cut and placed on a clean class plate.
b. Half of the electrode slurry is poured, on one side of the membrane, onto a doctor blade with 800 µm gap and is casted at 0.25 m/min speed.
c. The film with a glass is then transferred to phase inversion in a coagulation bath containing NMP/water (50:50) at room temperature for 30 mins.
d. The one-side coated membrane is dried using dry air or tissue paper gently to remove the water/solvent from the sample, or it can be dried overnight.
e. The remaining slurry is coated on the other side of the membrane the same way as above.
f. The film with a glass is then transferred to phase inversion in a coagulation bath containing non-solvent NMP/water (50:50) at room temperature for 30 mins.
g. The formed MEA is immersed in excess Reverse Osmosis (RO) water overnight.
h. The remaining impurity is removed by heating the electrodes in hot water (80 °C) for 1 hour.
The obtained MEA is either stored in RO water for a while or immediately placed in a sealed bag containing some water.

### EXAMPLE 5 - MEA interface microstructure and composition of MEA-05

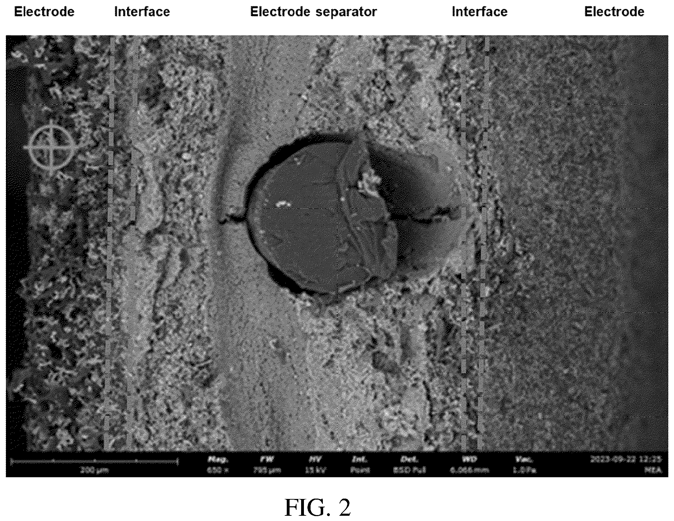

The MEA-5 was prepared by casting a 400 µm thick composite electrode slurry onto both sides of a commercial Zirfon 500 membrane, following the procedure outlined in example 4. Scanning Electron Microscopy (Figure 2) coupled with Energy Dispersive Spectroscopy (SEM-EDS) was used to investigate the microstructure and composition of the MEA. As can be seen from Figure 2, in the interface regions between the membrane and the electrodes there is no sharp transition between the layers, indicative for the true zero-gap assembly of the MEA.

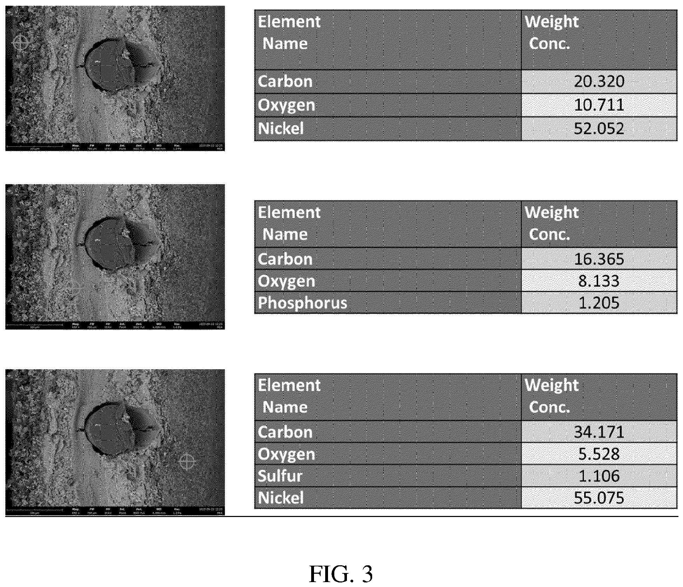

The analysis (Figure 3) revealed clear differentiation between the electrode and membrane regions. Notably, the membrane was embedded with ZrO₂ particles, characteristic of the Zirfon 500 membrane, while nickel was uniformly present on both sides of the membrane, corresponding to the composite electrode. The SEM-EDS results demonstrated a homogeneous interface between the electrode and membrane, indicative of good adhesion and consistent material distribution, which is essential for optimal electrochemical performance in applications like electrolyzers or fuel cellsn this example not only the electrode layers, but also the membrane layers are prepared from a membrane slurry, and is the MEA generated using a single-phase inversion step.

### EXAMPLE 6 -MEA interface porous nature and gas permeability of MEA-5

The gas permeability of the developed MEA was evaluated using gas-liquid porometry (Porolux 1000) to assess its porous structure and gas permeability properties. A MEA sample (prepared using example 4) with an active area of 10.2 mm in diameter was tested, utilizing the porometer. Compressed dry air was used as the testing gas, while FC-40 served as the wetting agent. This setup enabled a precise analysis of the MEAs pore characteristics and permeability, providing important insights into its potential performance in gas transport for electrochemical applications.

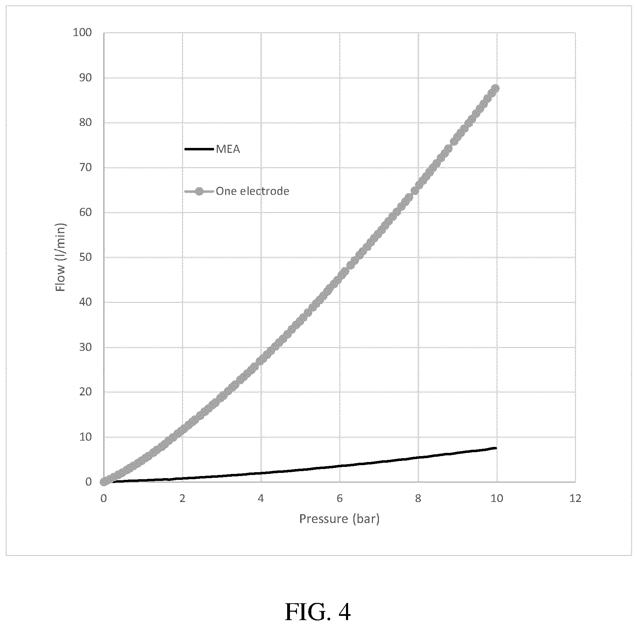

The results are shown in Figure 4 and indicate the porous nature of the developed MEA despite the two sides coating of the electrode separator by an anode and cathode electrodes, as shown in the SEM-EDS where a homogenous, zero-gap, interface was formed. However, this zero gap formation/interface, didn't change the porous natures of the electrodes when added to the electrode separator.

### EXAMPLE 7 -Comparative cell test in an alkaline water electrolyzer

An alkaline water electrolyser flow cell was developed to evaluate the performance of the developed MEA at room temperature. The cell is assembled by bolts, which are tightened using 3 Nm torque. The anolyte and catholyte are separated by the membrane in the cell. 1 M KOH was used as anolyte and catholyte solution. The electrolyte is circled at a certain flow velocity. The linear sweep voltammetry with the scanning speed of 2 mV/s from open circuit voltage to 2 V was applied for the electrochemical performance measurement.

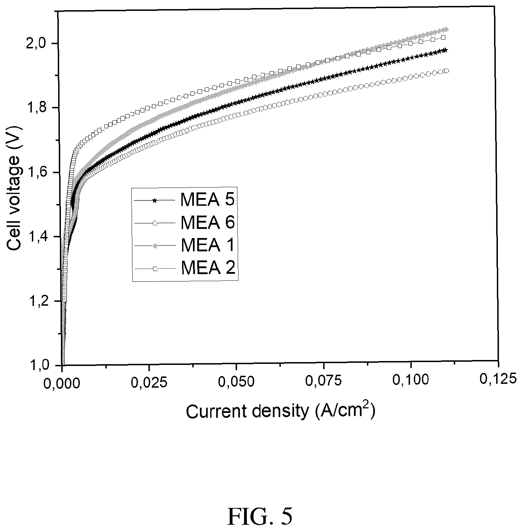

Both MEAs 1 and 2 of example 1 and the developed MEAs 5 and 6 of example 4 were tested in a flow cell test. As can be seen in Figure 5, both developed MEAs show better water electrolysis performance. For example, at 100 mA/cm², the overpotentials for MEA 5 and 6 are lower than those of MEA 1 and 2. This shows that the MEA made using the current invention have better energy efficiency for H₂ production in alkaline water electrolysis environment.

## Claims

1. A method of manufacturing a zero-gap membrane electrode assembly, the method comprising:
- casting an electrode slurry onto an electrode separator slurry or onto an electrode separator to obtain a combination; and
- exposing the combination to a phase inversion step;
wherein the phase inversion step induces formation of the membrane electrode assembly in situ as part of the phase inversion of the combination.

2. The method according to claim 1, wherein the electrode separator is a porous, dense, polymeric membrane, ceramic membrane, polymer-inorganic composite membrane, a cation exchange membrane, an anion exchange membrane, bipolar membrane or an amphoteric membrane.

3. The method according to claim 1 or 2, wherein the electrode separator is present as a membrane onto which the electrode slurry is casted.

4. The method according to claim 1 or 2, wherein the electrode separator is present as an electrode separator slurry onto which the electrode slurry is casted.

5. The method according to claim 4, wherein the electrode separator slurry is casted onto the support material prior to casting the electrode slurry.

6. The method according to any one of claims 1, 2, 4 or 5, wherein the electrode separator slurry comprises at least one of a polymer, a solvent, or an additive.

7. The method according to claim 4, wherein the support material of the electrode separator is a glass plate or mechanical reinforcement materials, including but not limited to polymeric mesh support like poly(ether ether ketone), polyphenylene sulfide and polyamide.

8. The method according to any one of the preceding claims wherein the electrode slurry comprises at least one of an anode slurry or a cathode slurry.

9. The method according to any one of the preceding claims, wherein the electrode slurry comprises at least one of an electrochemically active particle and a polymeric binder, **characterized in that** the weight ratio of the polymeric binder material to the particles in the slurry is between 2:98 and 50:50.

10. The method according claim 9, wherein the electrochemically active material is an electrochemically active metal or metal oxide selected from the group consisting of nickel, silver, tin, copper, iron, manganese, cobalt, zinc, titanium, bismuth, selenium, and noble metals.

11. The method according to any one of the preceding claims, wherein the electrode slurry is casted using tape casting, molding, screen printing or 3D printing.

12. The method according to claim 1, wherein the phase inversion step comprises exposing the combination to a non-solvent, that is a solvent exchange via non-solvent induced phase inversion, or a solvent evaporation step.

13. The method according to claim 12, wherein the non-solvent is selected from the group consisting of water, alcohols, organic solvent and mixtures thereof.

14. The method according to any one of claims 12 to 13, wherein the phase inversion step is carried out at a temperature in the range of about -10 °C to about 100 °C, preferably between 0°C to about 100 °C, more preferably between 15 °C to about 60 °C.

15. A membrane electrode assembly obtained by the method according to any one of claims 1 to 14.

16. A water electrolyzer involving the membrane electrode assembly obtained by the method according to any of claims 1 to 14.
